# FASCICULE DE BREVET EUROPEEN

(11) **EP 1 337 413 B1**
(45) Date de publication et mention de la délivrance du brevet: **06.07.2005**
(21) Numéro de dépôt: 01994695.3
(22) Date de dépôt: 20.11.2001
(51) Int. Cl.: B60K 15/077

(54) **RESERVOIR A CARBURANT DE VEHICULE AUTOMOBILE**
KRAFSTSTOFFTANK FÜR KRAFTFAHRZEUG
MOTOR VEHICLE FUEL TANK

(30) Priorité: 20.11.2000 FR 0014947
(43) Date de publication de la demande: 27.08.2003
(73) Titulaire: Inergy Automotive Systems Management, 75009 Paris (FR)
(72) Inventeur: FIRTION, Eric, F-60150 Villers Sur Coudun (FR); BAUDOUX, Patrice, F-02520 Flavy le Martel (FR)
(74) Mandataire: Decamps, Alain René François
(86) Numéro de dépôt international: PCT/EP2001/013533
(87) Numéro de publication internationale: WO 2002/040302

(56) Documents cités:
- EP-A- 0 864 458
- DE-A- 3 500 718
- DE-A- 4 123 367
- DE-A- 4 335 858
- DE-A- 4 433 301
- DE-A- 19 627 578
- DE-C- 3 612 194
- FR-A- 2 391 935
- FR-A- 2 768 667
- FR-A- 2 778 948
- US-A- 2 953 156

## Description

La présente invention a pour objet un réservoir à carburant de véhicule automobile comprenant un bac de réserve.

Un tel bac de réserve est encore appelé bac de tranquillisation ou bac de rétention et permet de constituer une réserve de carburant pour alimenter la pompe à carburant.

On connaît par la demande de brevet français FR-A-2 768 667 un réservoir à carburant de véhicule automobile comprenant un bac de réserve. Celui-ci est alimenté en carburant au moyen d'une pompe à jet comprenant une buse d'éjection délivrant un jet de carburant au travers d'une ouverture de sa paroi. Cette dernière est munie d'un clapet permettant de limiter la vidange du bac lorsque la pompe à jet ne fonctionne pas.

La demande de brevet français FR-A-2 778 948 décrit un réservoir à carburant comprenant un bac de réserve et une pompe à jet à l'intérieur du bac. Le fond du bac de réserve comporte une ouverture munie d'un clapet.

La demande de brevet français FR-A-2 391 935 décrit un réservoir à carburant comportant un conduit de recyclage du carburant en excès, débouchant dans un bac de réserve. Ce dernier est pourvu de clapets destinés à s'ouvrir lors des virages, de manière à permettre un apport complémentaire de carburant.

Dans ces réservoirs connus, la présence des clapets rend plus complexe leur fabrication et peut générer des problèmes de fiabilité et de vidange intempestive du bac. De plus, les clapets ne présentent pas l'étanchéité souhaitée.

Ainsi, après un stationnement prolongé du véhicule en pente et avec une faible quantité de carburant dans le réservoir, le bac a tendance à se vider au travers de l'ouverture équipée du clapet, ce qui peut provoquer le désamorçage de la pompe à carburant.

Le document DE 1962 7578 A décrit un réservoir à carburant selon le préambule de la revendication 1. La présente invention vise notamment à simplifier la fabrication des réservoirs à carburant et à améliorer leur fiabilité.

Elle y parvient grâce à un réservoir à carburant selon la revendication 1. Le réservoir à carburant de véhicule automobile comporte, outre le bac de réserve, un dispositif d'aspiration alimenté par du carburant en provenance directe d'un filtre à carburant et apte à aspirer du carburant, en au moins un point bas d'aspiration, à l'extérieur du bac de réserve et à le refouler dans le bac de réserve en au moins un point haut de refoulement, situé au-dessus d'un niveau minimum souhaité de carburant dans le bac de réserve et plus haut que le point bas d'aspiration.

L'invention permet la réalisation d'un bac de réserve dont le fond est étanche, car il n'est pas nécessaire de le munir d'un ou plusieurs clapets.

Dans une réalisation particulière, le bac de réserve comporte une paroi définissant un volume débouchant supérieurement par une ouverture dans le réservoir et le dispositif d'aspiration est apte à refouler le carburant dans le bac de réserve à travers cette ouverture.

Le dispositif d'aspiration est une pompe à jet.

Le débit d'une telle pompe à jet est de préférence choisi de telle sorte que la quantité de carburant refoulée par cette pompe à jet compense la quantité prélevée, consommée par la pompe à carburant, et garantisse un niveau minimum de carburant dans le bac de réserve, afin que la pompe à carburant ne désamorce pas.

Dans une mise en oeuvre préférée de l'invention, la pompe à jet comporte une cheminée d'aspiration sensiblement verticale, s'étendant de préférence sur sensiblement toute la hauteur du bac de réserve.

La pompe à jet comporte alors une buse d'éjection, qui peut être sensiblement tronconique, apte à éjecter le carburant dans la cheminée d'aspiration pour y créer, par effet Venturi, une dépression à la base de la cheminée, permettant d'aspirer du carburant contenu dans le réservoir à l'extérieur du bac de réserve.

De préférence, la cheminée d'aspiration comporte à sa partie inférieure une base, qui peut être sensiblement tronconique, définissant avec la buse d'éjection un passage dans lequel le carburant aspiré peut circuler.

La base de la cheminée d'aspiration comporte avantageusement une ouverture latérale permettant le passage d'un conduit d'alimentation de la buse d'éjection.

De préférence, la cheminée d'aspiration est réalisée sous la forme d'une pièce rapportée fixée dans le réservoir après la mise en place de la buse d'éjection.

De préférence encore, la cheminée d'aspiration comporte une extension latérale sensiblement demi-cylindrique, venant coiffer le conduit d'alimentation de la buse d'éjection.

Une telle extension latérale permet d'améliorer le maintien et le positionnement de la cheminée d'aspiration sur la buse d'éjection.

Dans une réalisation particulière, la cheminée d'aspiration comporte à son extrémité supérieure un bec formant déversoir, agencé pour permettre au carburant s'écoulant à l'intérieur du bec de se déverser dans le bac de réserve.

Un tel bec formant déversoir est particulièrement utile lorsque la pompe à jet délivre un faible débit de carburant, car ce dernier peut alors s'écouler le long du bec et se déverser dans le bac de réserve.

De préférence, le bec formant déversoir franchit par-dessus la paroi du bac de réserve.

Dans une autre réalisation particulière, la cheminée d'aspiration comporte un coude à sa partie supérieure.

La cheminée d'aspiration peut présenter un étranglement, par exemple situé sensiblement à mi-hauteur de la cheminée.

La cheminée d'aspiration comporte avantageusement des nervures de rigidification au niveau dudit étranglement.

La cheminée d'aspiration peut se raccorder à son extrémité supérieure à un tuyau agencé pour permettre au carburant s'écoulant dans la cheminée d'aspiration de se déverser dans le bac de réserve.

Avantageusement, un tel tuyau forme un coude disposé de manière à diriger le carburant sortant du tuyau dans le bac de réserve.

Ce tuyau permet de se passer d'un bec formant déversoir tel que précité.

De préférence, la pompe à jet est alimentée au travers d'un régulateur de pression.

Ce régulateur de pression est avantageusement monté sur un support fixé à la paroi de fond du réservoir.

Ce support peut comporter par exemple des pattes de fixation pourvues de trous dans lesquels sont bouterollés des plots réalisés d'un seul tenant avec la paroi de fond du réservoir.

De préférence, la buse d'éjection est réalisée d'un seul tenant avec le support.

De préférence encore, l'extension latérale sensiblement demi-cylindrique de la cheminée d'aspiration supporte au moins un premier organe de fixation apte à coopérer, de préférence par encliquetage, avec un deuxième organe de fixation appartenant au support du régulateur de pression.

Ainsi, la cheminée d'aspiration peut aisément être mise en place dans le réservoir, après la fixation du support du régulateur de pression dans celui-ci.

L'assemblage des différents éléments du réservoir s'en trouve simplifié.

Dans une réalisation particulière, le support du régulateur de pression comporte un corps tubulaire pourvu de fentes latérales permettant d'engager transversalement à l'axe dudit corps une épingle de retenue du régulateur de pression sur son support.

Dans une réalisation particulière, le réservoir comporte une pompe à carburant maintenue suspendue à l'intérieur du bac de réserve par un organe de maintien apte à atténuer la transmission des vibrations de la pompe à carburant au réservoir.

Dans une réalisation préférée, cet organe de maintien repose sur la partie supérieure du bac de réserve.

Ainsi, l'organe de maintien peut être aisément mis en place dans le réservoir, en étant posé sur le bac de réserve.

De préférence, l'organe de maintien comporte :
■ un anneau de fixation pourvu de bras de fixation reposant sur le bac de réserve,
■ une jupe de support recevant la pompe à carburant et
■ des branches élastiquement déformables reliant la jupe de support à l'anneau de fixation.

L'organe de maintien est de préférence réalisé par moulage de matière plastique d'un seul tenant.

De préférence, les bras de fixation sont conformés pour se fixer par encliquetage sur le bac de réserve.

Ainsi, la fixation de l'organe de maintien est aisée.

Dans une réalisation particulière, chacun des bras de fixation comporte une partie supérieure sensiblement perpendiculaire à l'axe de l'anneau de fixation, se raccordant à l'anneau dans le voisinage de sa tranche supérieure, et une partie inférieure comprenant, d'une part, un montant sensiblement parallèle à l'axe de l'anneau de fixation, se raccordant à ce dernier, et, d'autre part, une patte de verrouillage formant avec le montant précité une gorge dans laquelle s'engage la paroi du bac de réserve, la hauteur de cette gorge étant de préférence sensiblement égale à celle de l'anneau de fixation.

Chaque patte de verrouillage comporte avantageusement une dent apte à s'encliqueter dans un évidement correspondant de la paroi du bac de réserve.

De préférence, le montant d'au moins un bras de fixation est apte à s'engager dans une gorge formée sur la paroi du bac de réserve, à l'intérieur de ce dernier, ce qui améliore encore le maintien de l'anneau de fixation sur le bac de réserve.

De préférence, la jupe de support comporte plusieurs, de préférence trois, nervures longitudinales formant saillie vers l'intérieur.

De telles nervures peuvent permettre de limiter la surface de contact entre la pompe à carburant et la jupe de support et de réduire ainsi davantage la transmission des vibrations de la pompe à carburant vers le réservoir.

De préférence, la jupe de support est prolongée vers le bas par une jambe d'appui servant de butée basse pour la pompe à carburant.

De préférence, au moins une et de préférence encore chaque branche élastiquement déformable s'étend sensiblement dans un plan contenant l'axe de l'organe de maintien.

De préférence également, au moins une et de préférence encore chaque branche élastiquement déformable comporte un point d'inflexion, de préférence deux.

Grâce à la présence d'au moins un point d'inflexion et de préférence de deux points d'inflexion, l'organe de maintien présente des performances d'amortissement des vibrations qui peuvent s'avérer meilleures que celles obtenues au moyen de branches ne comportant aucun point d'inflexion.

Dans une réalisation particulière, au moins une et de préférence chaque branche comporte deux portions sensiblement rectilignes dont l'une présente une longueur supérieure à l'autre, par exemple sensiblement double de l'autre.

Dans une réalisation préférée, les branches se raccordent alternativement aux extrémités axiales supérieure et inférieure de la jupe de support et de l'anneau de fixation.

Une telle disposition alternée s'avère favorable à un bon maintien de la jupe de support tout en amortissant efficacement les vibrations de la pompe à carburant, à la fois axialement et transversalement.

Dans une réalisation particulière, les branches se raccordent à la jupe de support et à l'anneau de fixation sensiblement perpendiculairement à l'axe de ces derniers.

De préférence, lorsque l'organe de maintien est observé de côté, c'est-à-dire dans une direction perpendiculaire à l'axe de la jupe de support et de l'anneau de fixation, les extrémités axiales de l'anneau de fixation se situent entre les extrémités axiales de la jupe de support.

Dans une réalisation particulière, le réservoir comporte un déflecteur pour diriger dans le bac de réserve le carburant sortant de la cheminée d'aspiration.

Un tel déflecteur est particulièrement utile lorsque la pompe à jet délivre un débit élevé de carburant et que celui-ci a tendance à être éjecté verticalement de la cheminée d'aspiration.

Le déflecteur permet alors de dévier ce flux de carburant dans une direction choisie de manière à ce qu'il retombe dans le bac de réserve.

De préférence, le déflecteur est réalisé d'un seul tenant avec l'organe de maintien.

En particulier, le déflecteur peut être supporté par l'anneau de fixation.

De préférence, le déflecteur s'étend au-dessus du bec formant déversoir.

Le déflecteur peut comporter, dans une réalisation particulière, une partie incurvée ouverte vers l'intérieur du bac de réserve, se raccordant à l'anneau de fixation par deux parois sensiblement parallèles.

En présence d'un coude ou d'un tuyau à l'extrémité supérieure de la cheminée d'aspiration, le déflecteur précité n'est plus nécessaire.

De préférence, le bac de réserve est réalisé d'un seul tenant avec la paroi de fond du réservoir.

On peut ainsi obtenir une étanchéité améliorée et s'affranchir d'éventuels problèmes de fixation ou de maintien du bac de réserve par rapport au réservoir.

Autrement dit, la fixation du bac de réserve sur le réservoir est particulièrement fiable et simple lorsque le bac de réserve est assujetti à la paroi de fond du réservoir en étant réalisé par moulage de matière avec cette paroi de fond.

La paroi du bac de réserve peut être réalisée d'un seul tenant avec des cloisons s'étendant à l'extérieur du bac de réserve et se raccordant à la paroi de fond du réservoir.

De telles cloisons peuvent constituer des obstacles aux vagues de carburant dans le réservoir et contribuer à améliorer sa tenue mécanique.

Le réservoir comporte avantageusement un logement pour un filtre à carburant à l'extérieur du bac de réserve, ce logement étant réalisé de préférence d'un seul tenant par moulage de matière avec la paroi de fond de réservoir.

De préférence, le bac de réserve présente un coin rentrant, définissant un espace accueillant au moins partiellement la cheminée d'aspiration.

Celle-ci peut alors être positionnée près du bac de réserve à l'intérieur du réservoir, ce qui facilite l'alimentation en carburant du bac de réserve à partir de la cheminée d'aspiration.

De préférence, le réservoir comporte deux demi-coquilles assemblées.

Les éléments qu'il est nécessaire de disposer à l'intérieur du réservoir peuvent alors être mis en place avant l'assemblage des deux demi-coquilles et le réservoir peut être dépourvu d'une ouverture de grandes dimensions réalisée à travers sa paroi, susceptible de rendre plus difficile la mise en conformité du réservoir avec les normes relatives aux émissions d'hydrocarbures.

De préférence, le réservoir comporte une tubulure de remplissage se terminant au-dessus du bac de réserve, ce qui permet de remplir le bac de réserve avec une faible quantité de carburant puisque tout le carburant introduit dans la tubulure de remplissage commence à remplir le bac de réserve avant de remplir le reste du réservoir.

L'invention a encore pour objet l'un quelconque des éléments constitutifs du réservoir défini plus haut, considéré isolément.

Ainsi, l'invention a notamment pour objet un bac de réserve, caractérisé par le fait qu'il est réalisé d'un seul tenant avec la paroi de fond du réservoir.

L'invention a encore pour objet un organe de maintien de pompe à carburant tel que défini plus haut.

L'invention a encore pour objet un logement pour filtre à carburant, caractérisé par le fait qu'il est réalisé d'un seul tenant avec la paroi de fond du réservoir.

L'invention a encore pour objet une pompe à jet telle que définie plus haut et un support pour un régulateur de pression, tel que défini plus haut.

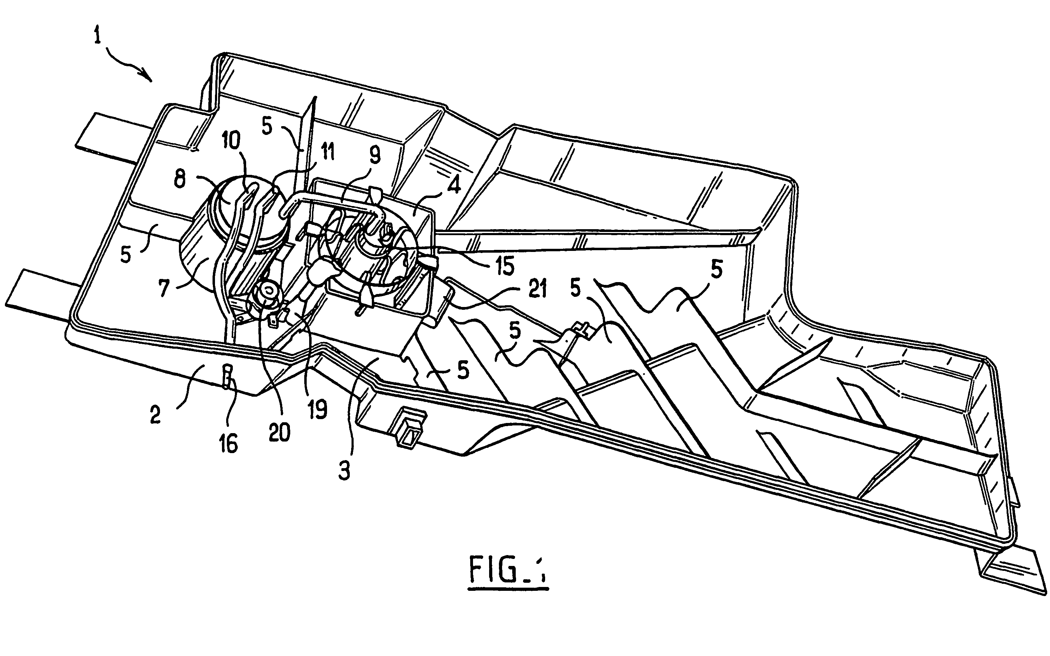

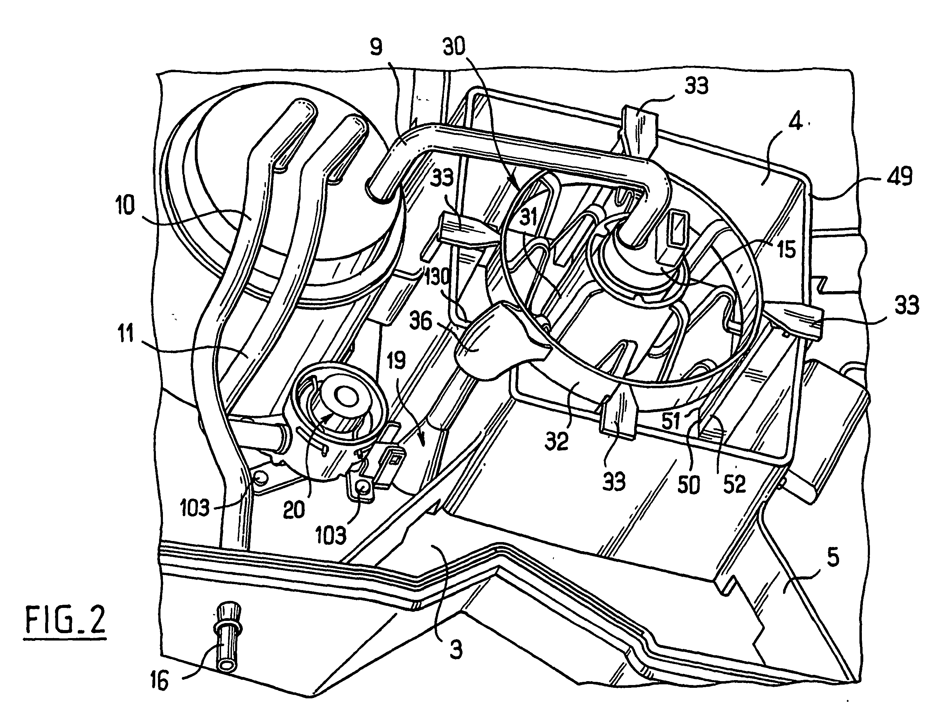

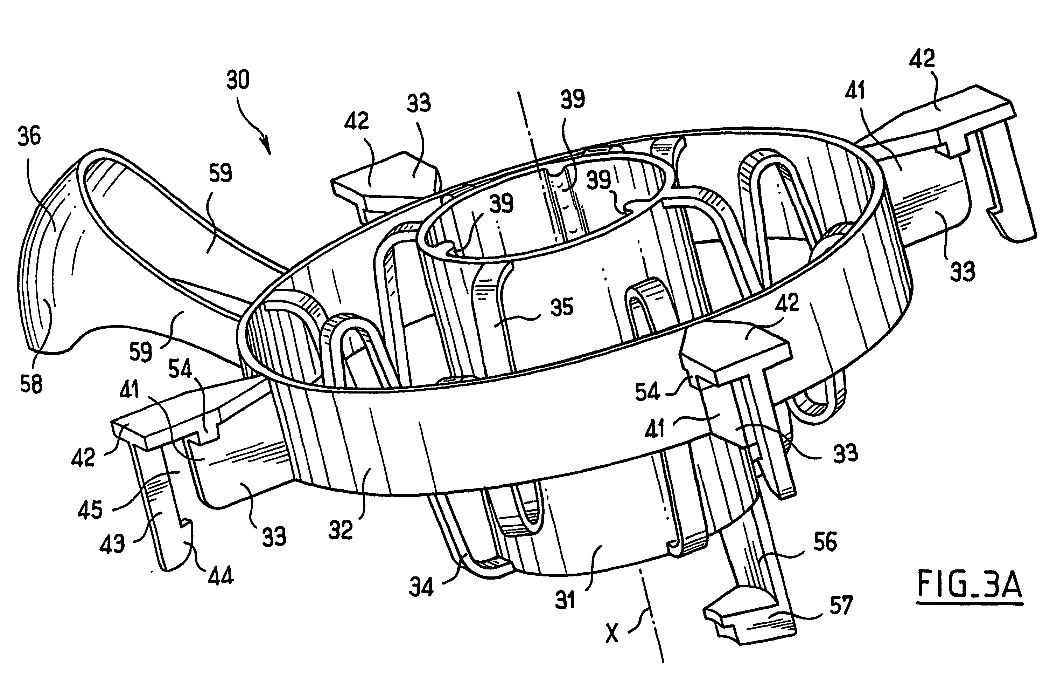

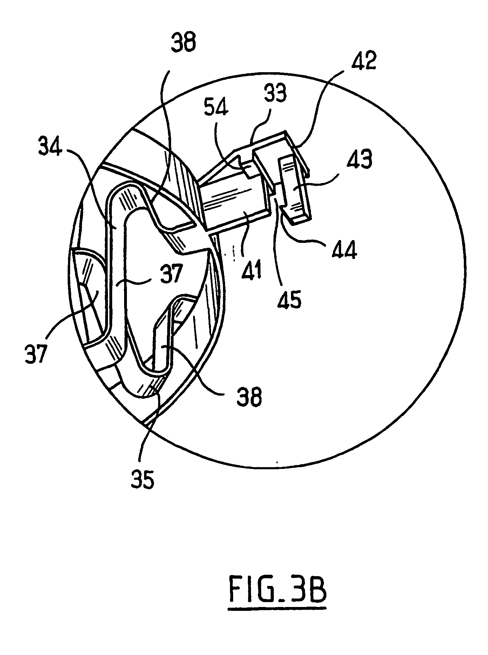

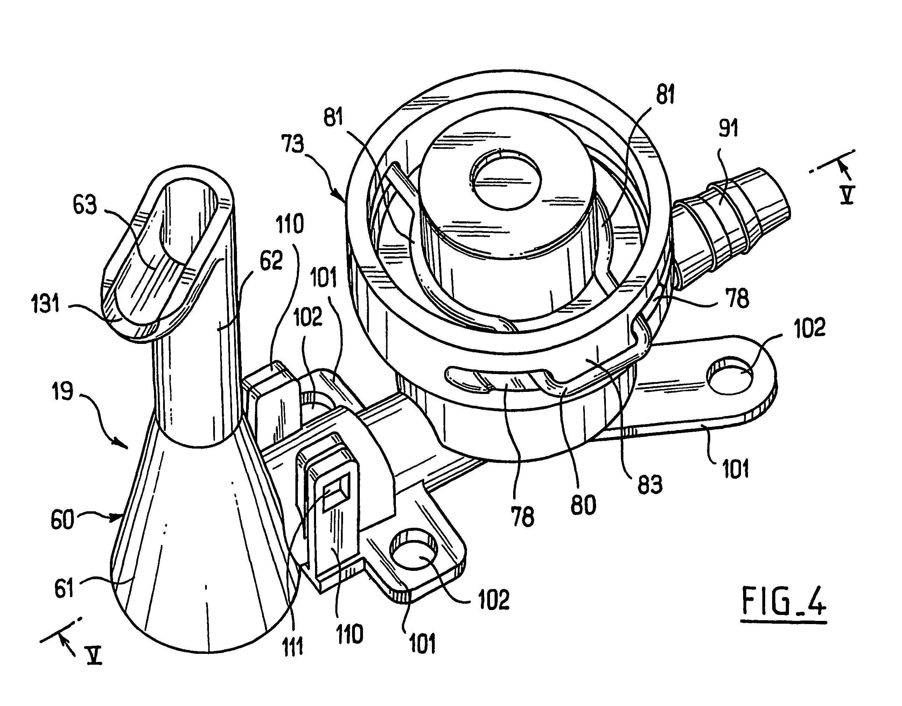

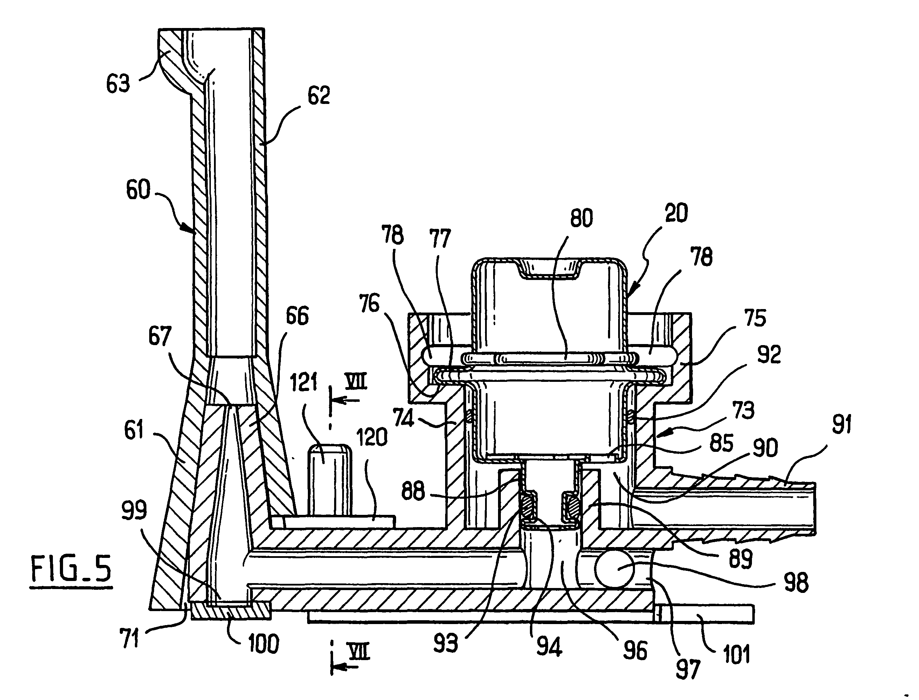

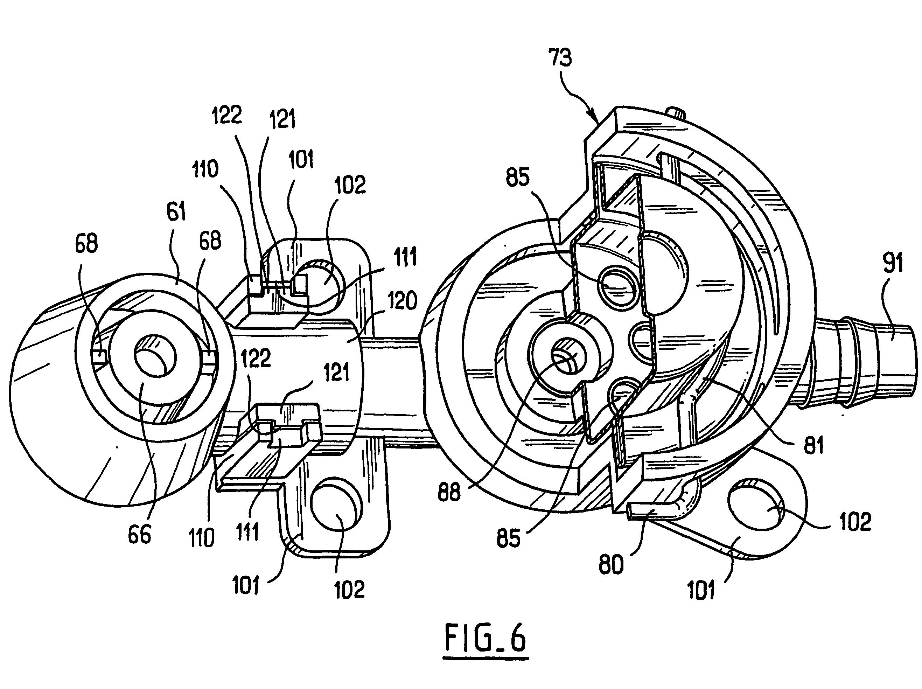

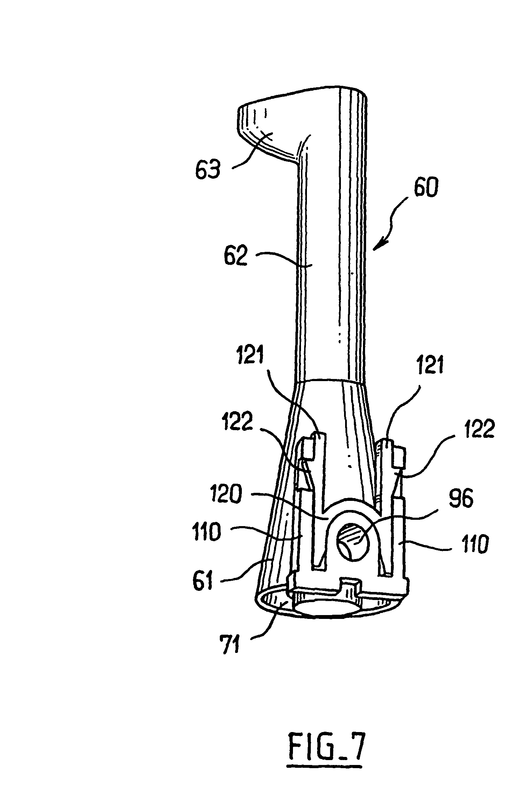

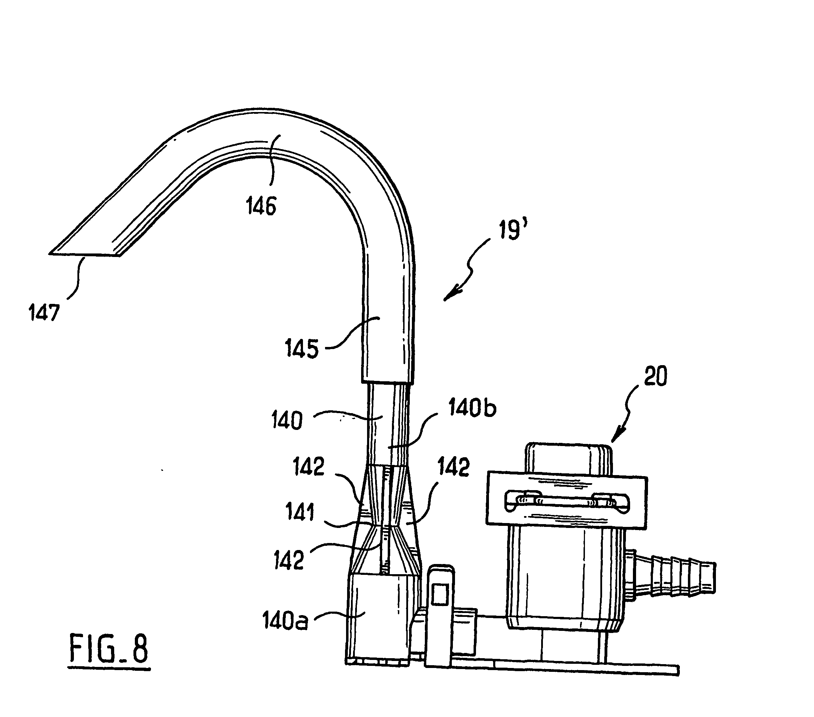

L'invention sera mieux comprise à la lecture de la description détaillée qui va suivre, d'exemples de mise en oeuvre non limitatifs de l'invention, et à l'examen du dessin annexé, sur lequel :
■ la figure 1 est une vue schématique en perspective d'une demi-coquille d'un réservoir à carburant conforme à un exemple de mise en oeuvre de l'invention,
■ la figure 2 est une vue à échelle agrandie d'un détail de la figure 1, faisant apparaître plus clairement le bac de réserve,
■ la figure 3A est une vue schématique en perspective représentant isolément l'organe de maintien de la pompe à carburant,
■ la figure 3B représente un détail de l'organe de maintien,
■ la figure 4 est une vue schématique en perspective de la pompe à jet et du support du régulateur de pression,
■ la figure 5 est une coupe dans un plan médian de la pompe à jet et du support du régulateur de pression représentés sur la figure 4,
■ la figure 6 est une vue schématique en perspective avec coupe partielle de la pompe à jet et du support du régulateur de pression représentés sur la figure 4,
■ la figure 7 est une coupe selon VII-VII de la figure 5, et
■ la figure 8 est une vue schématique latérale d'une pompe à jet et d'un régulateur de pression selon une variante de mise en oeuvre de l'invention.

On a représenté sur la figure 1 un réservoir à carburant (1) comprenant une demi-coquille inférieure (2) et une demi-coquille supérieure (non représentée) assemblées l'une contre l'autre à leur périphérie.

La demi-coquille inférieure (2) définit la paroi de fond (3) du réservoir et supporte divers éléments du système d'alimentation en carburant du véhicule automobile.

En particulier, comme on peut le voir plus clairement sur la figure 2, la paroi de fond (3) supporte un bac de réserve (4) et un ensemble de nervures (5) destinées à limiter l'amplitude des vagues de carburant dans le réservoir ainsi qu'à rigidifier celui-ci.

La paroi de fond (3) supporte également une paroi (7) cylindrique de révolution, définissant un logement de réception d'un filtre à carburant.

Ce logement est fermé en partie supérieure par un couvercle (8) comprenant des embouts sur lesquels se raccordent des tubulures (9, 10 et 11) respectives.

La tubulure (9) relie le filtre à carburant à une pompe à carburant (15) destinée à prélever du carburant dans le fond du bac de réserve (4).

La tubulure (10) se raccorde à un embout (16) permettant le raccordement au réservoir d'une tubulure extérieure reliée au moteur du véhicule.

Le carburant en excès, non prélevé par le moteur du véhicule, est dirigé vers une pompe à jet (19) par l'intermédiaire de la tubulure (11) et d'un régulateur de pression (20).

Une jauge à carburant (21) est fixée sur la demi-coquille (2).

La pompe à carburant (15) est maintenue à l'intérieur du bac de réserve (4) au moyen d'un organe de maintien (30) que l'on a représenté isolément sur les figures 3A et 3B.

Cet organe de maintien (30) comporte une jupe de support (31) dans laquelle est fixée la pompe à carburant (15) et un anneau de fixation (32) pourvu dans l'exemple décrit de quatre bras (33) servant à la fixation sur le bac de réserve (4).

La jupe de support (31) est reliée à l'anneau de fixation (32) par des branches (34 et 35) dont la forme est choisie de manière à réduire la transmission des vibrations de la pompe à carburant au réservoir.

La jupe de support (31) comporte dans l'exemple de réalisation décrit trois nervures (39) intérieures s'étendant sur toute sa hauteur, régulièrement réparties angulairement autour de son axe X.

Ces nervures (37) permettent de diminuer la surface de contact entre la pompe à carburant (15) et la jupe de support (31), ce qui contribue à limiter la transmission des vibrations de la pompe à carburant au réservoir.

Chaque branche (34 ou 35) comporte deux parties sensiblement rectilignes (37 et 38) dont l'une est de longueur sensiblement double de l'autre, chacune de ces parties sensiblement rectilignes (37 ou 38) présentant un point d'inflexion.

La portion sensiblement rectiligne (37) se raccorde par un coude perpendiculairement à la jupe de support (31) et la portion sensiblement rectiligne (38) se raccorde par un coude perpendiculairement à l'anneau de fixation (32), comme on peut le voir notamment sur la figure 3B.

Les portions sensiblement rectilignes (37 et 38) se raccordent entre elles par une portion sensiblement en forme de U, concave vers le haut pour les branches (35) et concave vers le bas pour les branches (34).

En outre, les portions sensiblement rectilignes (37) des branches (34 et 35) se raccordent alternativement aux extrémités inférieure et supérieure de la jupe de support (31) et les portions sensiblement rectilignes (38) des branches (34 et 35) se raccordent alternativement aux extrémités inférieure et supérieure de l'anneau de fixation (32).

Chaque bras de fixation (33) comporte, comme on peut le voir sur les figures 3A et 3B, un montant (41) sensiblement vertical, qui s'étend selon un plan contenant l'axe X et qui se raccorde par un côté sur sensiblement toute la hauteur de l'anneau de fixation (32).

Chaque bras de fixation (33) comporte en partie supérieure une paroi de support (42) sensiblement horizontale, sur la face inférieure de laquelle se raccordent le montant (41) précité et une patte de verrouillage (43), cette dernière étant munie d'une dent (44).

La patte de verrouillage (43) et le montant (41) ménagent entre eux une gorge (45) dans laquelle peut s'engager la paroi du bac de réserve (4), comme on peut le voir sur la figure 2.

Les dents (44) viennent alors s'engager dans des renfoncements, non apparents sur la figure 2, de la paroi du bac de réserve (4).

Lorsque l'organe de maintien (30) est en place, la tranche d'extrémité supérieure (49) du bac de réserve (4) repose contre la face inférieure des parois de support (42).

Le bac de réserve (4) comporte sur sa surface intérieure, comme on peut le voir sur la figure 2, des gorges (50) formées entre des nervures parallèles (51 et 52).

Ces nervures (51 et 52) sont disposées de telle manière que chaque montant (41) d'un bras de fixation (33) vienne s'engager dans la gorge (50) correspondante.

Les parois de support (42) comportent en outre une nervure transversale (54) sur leur face inférieure, au niveau du coin du montant (41) adjacent à la gorge (45).

Cette nervure (54) vient en appui sur les nervures (51 et 52) lorsque l'organe de maintien (30) est en place sur le bac de réserve (4).

L'organe de maintien (30) comporte en outre une jambe (56) de support de la pompe à carburant (15), cette jambe de support (56) comportant à son extrémité inférieure un coude dirigé vers l'intérieur (57), contre lequel vient en appui axialement la pompe à carburant (15).

L'organe de maintien (30) comporte enfin un déflecteur (36) dont le rôle sera précisé plus loin.

Ce déflecteur (36) comporte une partie incurvée (58), reliée à l'anneau de fixation (32) par deux branches parallèles (59).

On a représenté sur les figures (4 à 7) la pompe à jet (19).

Celle-ci comporte une cheminée d'aspiration (60), comprenant une base tronconique (61) surmontée par un conduit (62) sensiblement vertical, ce dernier étant pourvu dans l'exemple décrit en extrémité d'un bec (63) formant déversoir, dont la fonction sera précisée plus loin.

La base tronconique (61) reçoit une buse d'éjection (66) pourvu d'un orifice d'éjection (67) dirigé vers le haut, permettant d'éjecter du carburant à une vitesse relativement élevée dans le conduit (62).

La buse d'éjection (66) est immobilisée à l'intérieur de la base tronconique (60) notamment au moyen de deux nervures (68) diamétralement opposées, formant saillie à l'intérieur de la base tronconique (61), comme on peut le voir sur la figure 6.

Ces nervures (68) permettent de garantir entre la buse d'éjection (66) et la base tronconique (61) l'existence d'un espace dans lequel du carburant peut circuler, cet espace débouchant à l'extrémité inférieure (71) de la cheminée d'aspiration (60), à proximité de la paroi de fond (3) du réservoir.

La buse d'éjection (66) est réalisée avec une forme conique convergeant vers le haut, de manière à accélérer le carburant.

La buse d'éjection (66) est réalisée, dans l'exemple décrit, d'un seul tenant avec un support (73) dans lequel est monté le régulateur de pression (20), ce dernier n'étant que partiellement représenté dans un souci de clarté du dessin.

Le support (73) comporte un corps tubulaire (74), dont la partie supérieure (75) est élargie, ce corps (74) définissant un logement pour recevoir le régulateur de pression (20).

La partie supérieure (75) forme avec la partie inférieure du corps (74) un épaulement (76) contre lequel peut prendre appui une collerette (77) du régulateur de pression (20).

La partie supérieure (75) est traversée par des fentes latérales (78) qui permettent le montage d'une épingle de retenue (80) du régulateur de pression (20) dans le corps (74).

Cette épingle (80) comporte deux branches (81) aptes à s'engager sur le régulateur de pression (20) au-dessus de la collerette (77).

Les branches (81) de l'épingle (80) viennent également enserrer un pont de matière (83), s'étendant entre les fentes (78).

Le régulateur de pression (20) comporte, comme on peut le voir sur la figure 6 plus particulièrement, une pluralité d'orifices d'admission (85) réalisés autour d'un conduit de sortie (88) dirigé vers le bas.

Le conduit de sortie (88) est reçu dans une jupe intérieure (89) du support (73), cette jupe intérieure (89) ménageant avec le corps (74) un espace annulaire (90) communiquant avec un embout (91) servant au raccordement de la tubulure (11).

Les orifices d'admission (85) débouchent dans la chambre annulaire (90).

Un joint torique (92) assure l'étanchéité du montage du régulateur de pression (20) dans le corps (74) tandis qu'un joint d'étanchéité torique (93), logé dans une gorge (94) du conduit de sortie (88), assure l'étanchéité du montage de celui-ci dans la jupe intérieure (89).

La jupe intérieure (89) débouche inférieurement dans un conduit (96) communiquant avec la buse d'éjection (66).

Pour faciliter le moulage du support (73), le conduit (96) débouche à l'extérieur du côté opposé à la buse d'éjection (66) par un orifice (97), lequel est obturé, après la réalisation du support (73), par une bille (98).

Toujours pour des raisons de facilité de moulage, la buse d'éjection (66) débouche à l'extérieur, du côté opposé à l'orifice (67), par un orifice (99) qui est obturé après réalisation de la buse d'éjection (66) par un élément rapporté (100).

Le support (73) comporte des pattes de fixation (101) pourvues chacune d'un orifice (102) permettant d'accueillir un téton (103) réalisé d'un seul tenant avec la paroi de fond (3) du réservoir.

Chaque téton (103) est bouterollé après son insertion dans le trou (102), pour maintenir le support (73) sur la demi-coquille inférieure (2), comme on peut le voir sur la figure 2.

Le support (73) comporte, au niveau de l'extrémité du conduit (96) qui se raccorde à la buse d'éjection (66), deux pattes (110) destinées à la fixation de la cheminée d'aspiration (60).

Ces deux pattes (110) sont sensiblement verticales et parallèles et comportent chacune, au voisinage de leur extrémité supérieure, un évidement (111).

La cheminée d'aspiration (60) comporte une extension latérale (120), sensiblement demi-cylindrique, ouverte vers le bas comme on peut le voir sur la figure 7, adaptée à coiffer le conduit (96).

L'extension latérale (120) supporte deux pattes de verrouillage (121), sensiblement parallèles et verticales, pourvues extérieurement de dents (122) agencées pour s'encliqueter dans les évidements (111) des pattes (110).

On remarquera sur la figure 7 que l'écartement entre les pattes (110) et le conduit (96) correspond sensiblement à l'épaisseur d'un montant de l'extension latérale (120), de sorte que la cheminée d'aspiration (60) peut être fixée sur le support (73) avec un jeu de montage réduit.

Le bac de réserve (4) comporte un coin rentrant (130) qui définit un espace permettant d'accueillir au moins partiellement la cheminée d'aspiration (60), comme on peut le voir sur la figure 2.

Ainsi, le déflecteur (36) peut venir au-dessus du bec formant déversoir (63).

Ce dernier présente à son extrémité libre (131) un décrochement permettant au carburant sortant par le conduit (62) de tomber à l'intérieur du bac de réserve (4), dans le cas d'un débit faible.

Lors du fonctionnement de la pompe à carburant, le carburant non consommé par le moteur du véhicule est rejeté dans le bac de réserve (4), après traversée du régulateur de pression (20)et de la pompe à jet (19).

La buse d'éjection (66) projette le carburant provenant de la tubulure (11) avec une vitesse relativement élevée vers le haut dans le conduit (62), ce qui crée par effet Venturi une dépression au niveau de l'extrémité inférieure (71) de la base tronconique (61), de sorte que du carburant situé à l'extérieur du bac de réserve (4) se trouve aspiré dans la cheminée d'aspiration (60).

Lorsque le débit de carburant s'écoulant par le conduit (62) est élevé, le déflecteur (36) rabat le flux de carburant en direction de la pompe à carburant (15), de manière à lui permettre de retomber dans le bac de réserve (4).

Lorsque le débit de carburant dans le conduit (102) est faible, le déflecteur (36) ne sert pas du tout ou sert peu et c'est le bec (63) qui permet essentiellement au carburant de se déverser dans le bac de réserve (4).

De préférence, le bac de réserve (4) se situe à l'aplomb de l'extrémité par laquelle la tubulure de remplissage (non représentée) du réservoir débouche à l'intérieur de celui-ci, de sorte que le bac de réserve (4) est rempli en premier.

Les divers éléments du réservoir à carburant qui vient d'être décrit peuvent être réalisés dans tout matériau compatible avec le carburant remplissant le réservoir.

On peut par exemple utiliser pour réaliser l'organe de maintien (30) du polyacétal, du polyamide ou du polyéthylène haute densité, cette liste n'étant pas limitative.

Le nombre de branches (34 et 35) ainsi que leur largeur et leur forme sera choisi en fonction des fréquences de vibration de la pompe à carburant (15).

Les demi-coquilles du réservoir à carburant peuvent être réalisées par tout procédé de conformation de matière, et notamment par moulage par injection, par rotomoulage ou par soufflage.

Les deux demi-coquilles du réservoir à carburant peuvent être réalisées en polyéthylène haute densité, par exemple.

Bien entendu, l'invention n'est pas limitée à l'exemple de réalisation qui vient d'être décrit.

On peut notamment modifier la manière dont la pompe à jet est agencée ou la manière dont la pompe à carburant est maintenue en place dans le bac de réserve.

Dans une première variante non illustrée, le bec formant déversoir et le déflecteur sont remplacés par un coude en partie supérieure de la cheminée d'aspiration, ce coude débouchant au-dessus du bac de réserve.

On a représenté sur la figure 8 une pompe à jet (19') conforme à une variante de mise en oeuvre de l'invention.

La pompe à jet (19') comporte une cheminée d'aspiration (140) présentant à mi-hauteur environ un étranglement (141).

On remarquera à l'examen de la figure 8 que la section transversale de la portion de cheminée (140a) en dessous de l'étranglement (141) est plus grande que la section transversale de la portion de cheminée (140b) au-dessus de l'étranglement (141).

La cheminée (140) comporte quatre nervures de rigidification (142) extérieures disposées au niveau de l'étranglement (141).

La cheminée (140) se raccorde à son extrémité supérieure à un tuyau (145) franchissant par-dessus la paroi du bac de réserve (4), de telle sorte que le carburant sortant de la portion de tuyau (145) tombe directement dans le bac de réserve (4).

L'extrémité (147) du tuyau (136) par laquelle sort le carburant se situe, dans l'exemple décrit, plus bas que le bord supérieur de la paroi du bac de réserve (4).

En variante, l'extrémité (147) pourrait se situer plus haut que le bord supérieur de la paroi du bac de réserve (4).

## Revendications

1. Réservoir à carburant (1) de véhicule automobile comprenant
• un bac de réserve (4) dont le fond est étanche ;
• un dispositif d'aspiration (19) alimenté par du carburant en provenance directe du filtre à carburant (7) et apte à aspirer du carburant, en au moins un point bas d'aspiration, à l'extérieur du bac de réserve (4) et à le refouler dans le bac de réserve (4) en au moins un point haut de refoulement, situé au-dessus d'un niveau minimum souhaité de carburant dans le bac de réserve (4) et plus haut que le point bas d'aspiration, le dispositif d'aspiration étant une pompe à jet (19, 19') ;
• une pompe à carburant (15) destinée à prélever du carburant dans le fond du bac de réserve (4) ;
• une tubulure (9) reliant le filtre à carburant (7) à la pompe à carburant (15) ;
• une tubulure (11) et un régulateur de pression (20) dirigeant le carburant en excès, non prélevé par le moteur, vers la pompe à jet (19 ; 19') qui le rejette dans le bac de réserve (4) et crée par effet Venturi, une dépression permettant d'aspirer du carburant contenu dans le réservoir à l'extérieur du bac de réserve (4), **caractérisé en ce que** la pompe à jet (19, 19') est alimentée par du carburant en provenance directe du filtre à carburant (7), et le réservoir à carburant comprend en outre un logement de réception d'un filtre à carburant (7) situé en dehors du bac de réserve (4),

2. Réservoir selon la revendication précédente, **caractérisé par le fait que** la pompe à jet (19 ; 19') comporte une cheminée d'aspiration (60 ; 140) sensiblement verticale, s'étendant de préférence sur sensiblement toute la hauteur du bac de réserve (4).

3. Réservoir selon la revendication précédente, **caractérisé par le fait que** la cheminée d'aspiration (60) comporte, à son extrémité supérieure, un bec (63) formant déversoir, agencé pour permettre au carburant s'écoulant à l'intérieur du bec de se déverser dans le bac de réserve (4).

4. Réservoir selon la revendication 2 ou 3, **caractérisé par le fait que** la pompe à jet (19; 19') est alimentée au travers d'un régulateur de pression (20).

5. Réservoir selon une quelconque des revendications 2 à 4, **caractérisé par le fait qu'**il comporte un déflecteur (36) pour diriger vers le bac de réserve le carburant sortant de la cheminée d'aspiration (60).

6. Réservoir selon l'une quelconque des revendications précédentes, **caractérisé par le fait que** le bac de réserve (4) est réalisé d'un seul tenant avec la paroi de fond (3) du réservoir.

7. Réservoir selon l'une quelconque des revendications précédentes, **caractérisé par le fait qu'**il comporte deux demi-coquilles (2) assemblées.

8. Réservoir selon l'une quelconque des revendications précédentes, **caractérisé par le fait qu'**il comporte une tubulure de remplissage se terminant au-dessus du bac de réserve (4).

## Patentansprüche

1. Kraftstoffbehälter (1) für Automobilfahrzeuge, mit
■ einem Reserveabteil (4) mit dichtem Boden;
■ einer Ansaugvorrichtung (19) für den Kraftstoff, die befähigt ist, Kraftstoff an zumindest einem tiefliegenden Ansaugpunkt außerhalb des Reserveabteiles (4) anzusaugen und den Kraftstoff in das Reserveabteil (4) an zumindest einem höhergelegenen Füllpunkt zu füllen, der oberhalb eines gewünschten Mindestpegels des Kraftstoffes im Reserveabteil (4) und höher als der Ansaugpunkt liegt;
■ einer Kraftstoffpumpe (15), die dazu bestimmt ist, den Kraftstoff vom Boden des Reserveabteiles (4) anzusaugen;
■ einem Rohr (9), welches einen Kraftstoffilter (7) mit der Kraftstoffpumpe (15) verbindet;
■ wobei die Ansaugvorrichtung eine Strahlpumpe (19; 19') ist;
■ einem Rohr (11) und einem Druckregler (20), welche den Kraftstoffüberschuß, der vom Motor nicht angesaugt wird, zur Strahlpumpe (19; 19') leiten, welche ihn in das Reserveabteil (4) zurückbefördert und durch einen Venturi-Effekt einen Unterdruck erzeugt, der es gestattet, den in dem Kraftstoffbehälter außerhalb des Reserveabteiles (4) vorhandenen Kraftstoff anzusaugen, **dadurch gekennzeichnet, daß** die Strahlpumpe (19; 19') durch den Kraftstoff, der direkt von dem Kraftstoffilter (7) kommt, gespeist wird, und daß der Kraftstoffbehälter ferner einen Sitz zur Aufnahme eines Kraftstoffilters (7) aufweist, der außerhalb des Reserveabteiles (4) liegt.

2. Behälter nach Anspruch 1, **dadurch gekennzeichnet, daß** die Strahlpumpe (19; 19') einen Ansaugweg (60; 140) hat, der im wesentlichen vertikal verläuft und sich vorzugsweise über die gesamte Höhe des Reserveabteiles (4) erstreckt.

3. Behälter nach dem vorhergehenden Anspruch, **dadurch gekennzeichnet, daß** der Ansaugweg (60) an seinem oberen Ende einen Schnabel (63) aufweist, welcher einen Überlauf bildet, der so ausgebildet ist, daß der Kraftstoff vom Inneren des Schnabels in das Reserveabteil (4) strömt.

4. Behälter nach Anspruch 2 oder 3, **dadurch gekennzeichnet, daß** die Strahlpumpe (19; 19') über den Druckregler (20) gespeist wird.

5. Behälter nach einem der vorhergehenden Ansprüche 2 bis 4, **dadurch gekennzeichnet, daß** er einen Ablenker (36) aufweist, um den aus dem Ansaugweg (60) austretenden Kraftstoff in das Reserveabteil zu leiten.

6. Behälter nach einem der vorhergehenden Ansprüche, **dadurch gekennzeichnet, daß** das Reserveabteil (4) mit dem Boden (3) des Behälters einstückig ausgebildet ist.

7. Behälter nach einem vorhergehenden Ansprüche, **dadurch gekennzeichnet, daß** er zwei zusammengebaute Halbschalen (2) aufweist.

8. Behälter nach einem der vorhergehenden Ansprüche, **dadurch gekennzeichnet, daß** er ein Füllrohr aufweist, das oberhalb des Reserveabteiles (4) endet.

## Claims

1. Motor-vehicle fuel tank (1) comprising
■ a reserve container (4), the bottom of which is leaktight;
■ a suction device (19) supplied with fuel and capable of sucking in fuel at at least one low suction point outside the reserve containter (4) and delivering it to the reserve container (4) at at least one high delivery point situated above a desired minimum level of fuel in the reserve container (4) and higher than the low suction point;
■ a fuel pump (15) intended to draw fuel from the bottom of the reserve container (4);
■ a tube (9) connecting the fuel filter (7) to the fuel pump (15);
■ the suction device is a jet pump (19; 19');
■ a tube (11) and a pressure regulator (20) directing the excess fuel, not drawn in by the engine, towards the jet pump (19; 19') which discharges it into the reserve container (4) and, by a Venturi effect, creates a reduced pressure which enables fuel contained in the tank outside the reserve container (4) to be sucked in, **characterized in that** the jet pump (19; 19') is supplied with fuel coming directly from the fuel filter (7), and the fuel tank furthermore includes a housing for accommodating a fuel filter (7), situated outside the reserve container (4).

2. Tank according to the preceding claim, **characterized in that** the jet jump (19; 19') includes a substantially vertical suction duct (60; 140), preferably extending substantially over the full height of the reserve container (4).

3. Tank according to the preceding claim, **characterized in that**, at its upper end, the suction duct (60) includes a nose (63) forming a spout arranged to allow the fuel flowing within the nose to pour into the reserve container (4).

4. Tank according to Claim 2 or 3, **characterized in that** the jet pump (19; 19') is fed via a pressure regulator (20).

5. Tank according to any one of Claims 2 to 4, **characterized in that** it includes a deflector (36) to direct the fuel emerging from the suction duct (60) towards the reserve container.

6. Tank according to any one of the preceding claims, **characterized in that** the reserve container (4) is made in one piece with the bottom wall (3) of the tank.

7. Tank according to any one of the preceding claims, **characterized in that** it includes two assembled half-shells (2).

8. Tank according to any one of the preceding claims, **characterized in that** it includes a filler nozzle ending above the reserve container (4).
